**Europäisches Patentamt**

**European Patent Office**

**Office européen des brevets**

(19)

(11) Veröffentlichungsnummer: **0 190 414**
**B1**

(12) **EUROPÄISCHE PATENTSCHRIFT**

(45) Veröffentlichungstag der Patentschrift:
08.03.89

(51) Int. Cl.⁴: **F 16 K 7/17**

(21) Anmeldenummer: **85114411.3**

(22) Anmeldetag: **13.11.85**

(54) **Druckmittelbetätigtes Membranventil.**

(30) Priorität: **06.12.84 DE 3444865**

(43) Veröffentlichungstag der Anmeldung:
**13.08.86 Patentblatt 86/33**

(45) Bekanntmachung des Hinweises auf die Patenterteilung:
**08.03.89 Patentblatt 89/10**

(84) Benannte Vertragsstaaten:
**AT BE FR GB IT NL**

(56) Entgegenhaltungen:
**DE-A-3 219 146**
**US-A-4 181 151**
**US-A-4 486 001**

(73) Patentinhaber: **Regel + Messtechnik GmbH Regler- und Anlagenbau für Gas- Druckreglung, Osterholzstrasse 45, D-3500 Kassel (DE)**

(72) Erfinder: **Fischer, Rudolf, Dipl.- Ing., Jugendheimstrasse 22, D-3500 Kassel (DE)**
Erfinder: **Gärtner, Josef, Dipl.- Ing., An der Söhrebahn 20, D-3501 Söhrewald- Wellerode (DE)**

(74) Vertreter: **Walther, Horst, Dipl.- Ing., Wilhelmshöher Allee 275 Postfach 41 01 08, D-3500 Kassel (DE)**

EP 0 190 414 B1

## Beschreibung

Die Erfindung betrifft ein druckmittelbetätigtes Membranventil, dessen in einem Gehäuse eingespannte Membran auf einem Stützkörper aufliegt, der am Ende des Eingangskanals aufgesetzt ist, der konzentrisch zum Eingangskanal Öffnungen aufweist und der eine zum Eingangskanal konzentrisch aber in Strömungsrichtung vor den Öffnungen angeordnete Dichtkante besitzt. Solch ein Ventil ist beispielsweise aus DE-A-3 219 146 bekannt.

Die Membran eines Membranventils dient bekanntlich als elastische Trennstelle zwischen dem Eingangsraum und dem Ausgangsraum des Membranventils. Die Druckdifferenz zwischen diesen beiden Räumen muß voll von der Membran aufgenommen werden.

Damit eine Überlastung der Membran bei Druckbeanspruchung vermieden wird, liegt die Membran auf einem Stützkörper auf, der zur Ausgangsseite mit entsprechenden Öffnungen versehen ist, über die das Durchströmmedium abfließen kann. Je nach der Betriebssituation werden mehr oder weniger große Querschnitte der Öffnungen an der Ausgangsseite freigegeben. Im geschlossenen Zustand des Membranventils sind die Öffnungen an der Ausgangsseite völlig abgedeckt. Damit nun in diesem Zustand eine absolute gasdichte Trennung vorhanden ist, besitzt der Stützkörper eine Dichtkante mit einer gewissen Höhe. Damit eine gute Dichtwirkung erzielt wird, muß eine ausreichende Höhe der Dichtkante vorhanden sein.

Bei der bekannten Ausführungsform eines druckmittelbetätigten Membranventils ist die Dichtkante am äußeren Umfang des Stützkörpers unmittelbar vor den Öffnungen an der Ausgangsseite angebracht.

Bei dieser Ausführungsform ist ein schwingungsfreies Arbeiten der Membran nicht gewährleistet, weil durch die Lage der Dichtkante ein gleichmäßiger Strömungsverlauf nicht gewährleistet ist.

Der Erfindung liegt daher die Aufgabe zugrunde, ein druckmittelbetätigtes Membranventil zu schaffen, bei dem die Dichtkante so ausgebildet ist, daß eine absolute Dichtheit erreicht wird, gleichzeitig aber ein schwingungsfreies Arbeiten gewährleistet ist.

Nach der Erfindung wird das dadurch erreicht, daß der Abstand "a" zwischen der Dichtkante und der inneren Kante der Öffnung an der Austrittsseite mindestens dreimal so groß ist wie die Hohe "b", bezogen auf die Membranauflagefläche der Dichtkante, aber nicht kleiner als der Membranhub "c", der definiert ist als der Abstand von der Spitze der Dichtkante bis zur Innenseite der an der Gehäuseinnenwand vollständig anliegenden Membran.

Die Überhöhung der Dichtkante bewirkt, daß die Membran unmittelbar hinter der Dichtkante "frei liegt", sich also zwischen Membran und Stützkörper ein Freiraum bildet. Durch die vorgenannten Maßnahmen wird erreicht, daß die innere Kante der Öffnungen erst hinter dem Freiraum beginnt, der sich hinter der Dichtkante bildet.

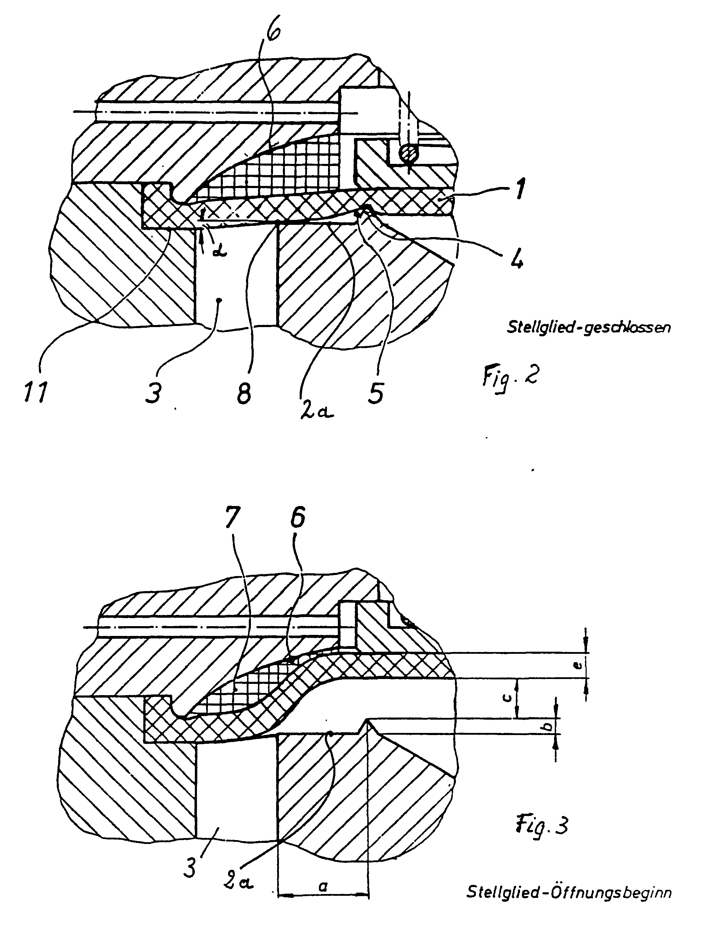

Wie die Fig. 2 zeigt, bewirkt der richtige Abstand "a" also, daß die Öffnungen an der Austrittsseite beim Abheben der Membran von der Dichtkante noch abgedeckt bleiben, so daß beim Arbeitsbeginn nicht sofort alle Öffnungen auf einmal freigegeben werden und dadurch der gewünschte Stabilisierungseffekt erreicht ist.

Nach einem weiteren Merkmal der Erfindung ist die im Gehäuseteil befindliche äußere Einspannfläche für die Membran gegenüber der inneren Kante der Öffnungen an der Austrittsseite abgesenkt.

Dabei ist die Ausbildung so getroffen, daß die über den Öffnungen an der Austrittsseite befindliche Fläche der Membran unter einem Winkel von mindestens 2 Grad in bezug auf die Ebene der Einspannfläche verläuft. Diese Lage der Einspannfläche für die Membran unterstützt die eingangs geschilderte Wirkung der Membran, nämlich daß die Öffnungen an der Austrittsseite beim Abheben der Membran von der Dichtkante noch abgedeckt bleiben, so daß die Schwingungsneigung während des Arbeitsvorganges weitgehend herabgesetzt ist.

Nach einem weiteren Merkmal der Erfindung sind die Öffnungen an der Austrittsseite in mehrere Gruppen, mindestens in drei Gruppen zusammengefaßt, wobei deren innere Kanten versetzt zueinander liegen. Dabei hat sich als vorteilhaft herausgestellt, wenn das Maß der Versetzung mindestens einem Viertel der Dicke der Membran entspricht. Durch diese Ausbildung der Öffnungen an der Austrittsseite wird erreicht, daß die insbesondere bei den bekannten Membranventilen im Kleinlastbereich bestehende Neigung zu Eigenschwingungen weitgehend herabgesetzt wird, weil dadurch auch erreicht ist, daß die Öffnungen nicht alle zugleich freigegeben werden.

Nach einem weiteren Merkmal der Erfindung ist im Stelldruckraum zwischen der Membran und der Gehäuseinnenwand ein zusammendruckbarer dauerelastischer Füllkörper vorgesehen. Dadurch wird neben einem gewissen Dämpfungseffekt auch ein günstiges Arbeitsverhalten des Membranventils bei sehr geringen Druckdifferenzen erreicht; denn bei sehr geringen Druckdifferenzen besteht die Gefahr, daß die Membran nicht mehr an der Gehäusewand anliegt, sondern auf den Gasstrahl "schwimmt". Ein solches Verhalten kann zu extremen Instabilitäten, also zu erheblichen Schwingungen führen. Die Anordnung des zusammendruckbaren dauerelastischen Füllkörpers in diesem Raum ergibt eine zusätzliche Kraft auf die Membran zum Zwecke der Anpressung der Membran auf die Öffnungen an der Austrittsseite.

In der Zeichnung ist eine beispielsweise Ausführungsform dargestellt.

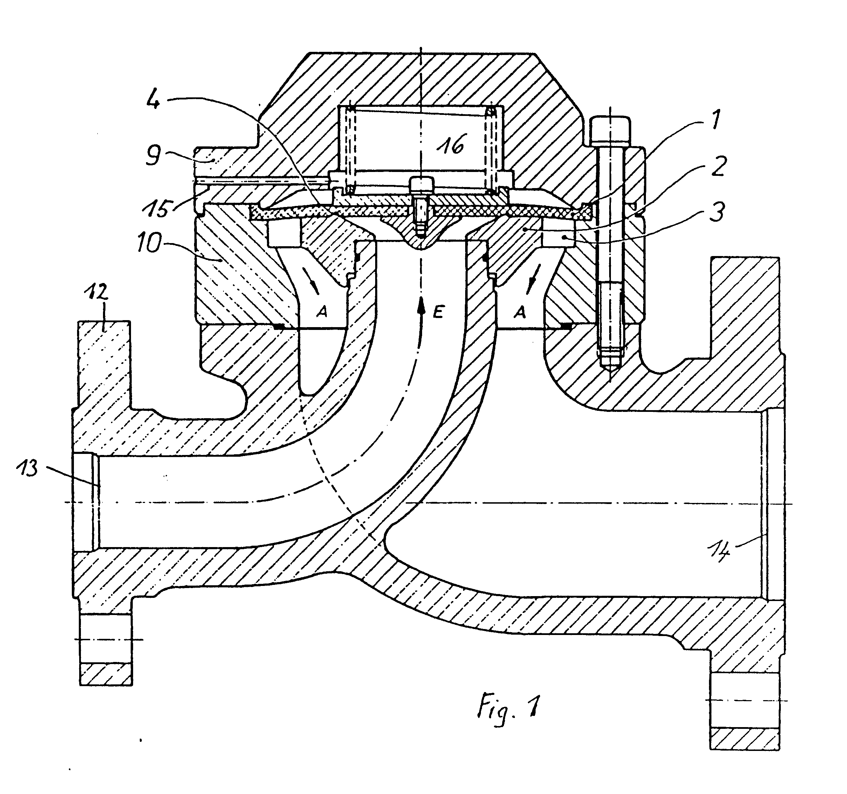

Fig. 1    zeigt das Membranventil im Schnitt;
Fig. 2    zeigt in vergrößerter Darstellung einen
          Ausschnitt des linken Teils der
          Membran mit dem Stützkörper;
Fig. 3    zeigt die Öffnungsstellung der
          Membran;
Fig. 4    zeigt eine Aufsicht auf den
          Stützkörper.

Das Membranventilgehäuse besteht aus dem Grundgehäuse 12 mit mit dem Eingangskanal 13 und dem Ausgangskanal 14. Auf diesem Grundgehäuse befindet sich das eigentliche Gehäuse 10, auf dem der Deckelteil 9 befestigt ist.

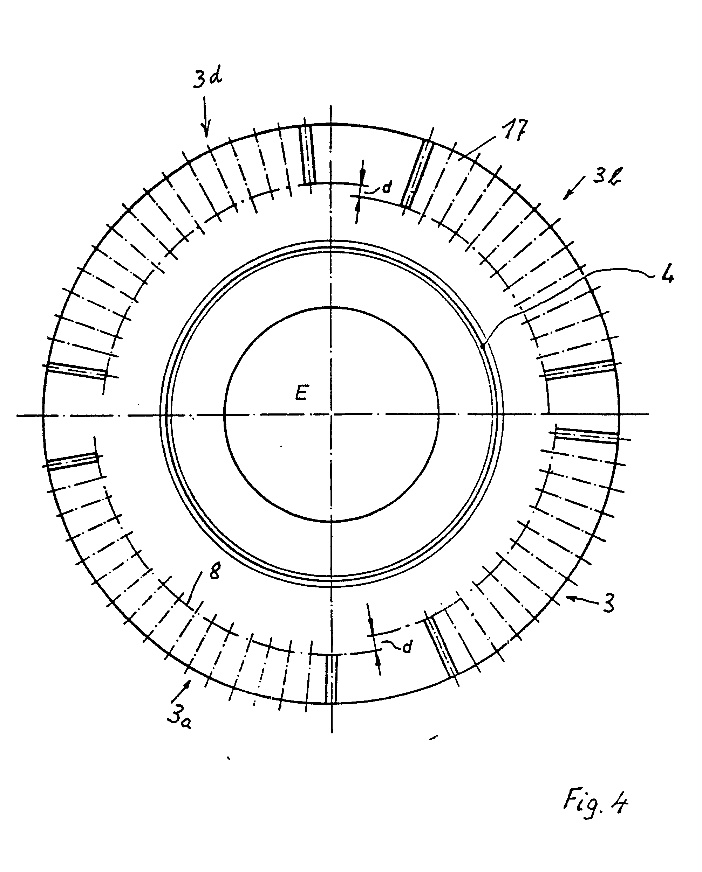

Zwischen dem Deckelteil 9 und dem eigentlichen Gehäuse 10 ist die Membran 1 eingespannt. Die Abstützung der Membran erfolgt mit Hilfe eines Stützkörpers 2, welcher am Ende des Eingangskanals 13 aufgesetzt ist. Der Deckelteil 9 besitzt den Zugangskanal 15, der bis zu dem Stellraum 16 reicht, der sich hinter der Membran 1 befindet. Der Stützkörper 2 besitzt Öffnungen 3, die, wie die Fig. 4 zeigt, in Form von Schlitzen ausgebildet sind. Wie sich insbesondere aus der Fig. 2 ergibt, besitzt der Stützkörper eine Dichtkante 4.

Um ein schwingungsfreies Arbeiten der Membran zu gewährleisten, ist die Dichtkante 4 in einem bestimmten Mindestabstand "a" von der inneren Kante 8 der Öffnungen 3 angebracht.

Die Dichtkante 4 besitzt eine gewisse Höhe "b", bezogen auf die Membranauflagefläche 2a des Stützkörpers 2. Das bedingt, daß sich hinter der Dichtkante 4 zwangsläufig ein Freiraum 5 ausbildet. Wird der Abstand "a" richtig gewählt, ist gewährleistet, daß die innere Kante 8 der Öffnungen 3 an der Austrittsseite erst hinter dem Freiraum 5 beginnt.

Wie Experimente ergeben haben, muß der Abstand "a" mindestens das Dreifache der Höhe "b" der Dichtkante 4 betragen.

Darüberhinaus besteht eine bestimmte Relation zwischen dem Abstand "a" und dem maximalen Membranhub. Ist nämlich der Abstand "a" der Dichtkante von der inneren Kante 8 der Öffnungen an der Austrittsseite nicht groß genug, dann besteht die Gefahr, daß das an der Entspannungsstelle meist mit Schallgeschwindigkeit fließende Durchflußmedium und evtl. mitgeführte Schmutzteilchen die Dichtkante 4 beschädigen bzw. sozusagen abschleifen.

Ist der Abstand "a" von der inneren Kante 8 richtig gewählt, dann ist die Geschwindigkeit infolge des entsprechenden erweiterten Kanals soweit herabgesetzt, daß keine Beschädigungen mehr zu befürchten sind.

Wie insbesondere die Fig. 3 zeigt, stellt der richtig gewählte Abstand "a" sicher, daß die Membran 4 gegenüber der Dichtkante bereits an der Gehäuseinnenwand anliegt, so daß der maximale Strömungsquerschnitt im Bereich der Dichtkante bereits erreicht ist.

Wie Experimente ergeben haben, darf der Abstand "a" nicht kleiner sein als der maximale Membranhub "c"; wobei unter Membranhub der Abstand von der Spitze der Dichtkante 4 bis zur Innenseite der vollständig anliegende Membran zu verstehen ist.

Nach einem weiteren Merkmal der Erfindung ist die äußere Einspannfläche 11 für die Membran gegenüber der inneren Kante 8 der Öffnung 3 abgesenkt. Im einzelnen ist die Ausbildung dabei so getroffen, daß die über der Öffnung 3 an der Austrittsseite befindliche Fläche der Membran 1 unter einem Winkel von mindestens 2 Grad in bezug auf die Ebene der Einspannfläche 11 verläuft.

Auch diese Ausbildung unterstützt die erstrebte Wirkung, die durch das Verhältnis des Abstandes "a" zur Höhe der Dichtkante erstrebt wird, nämlich daß die Öffnungen an der Austrittsseite beim Abheben der Membran 1 von der Dichtkante 4 noch abgedeckt bleiben.

Wie die Fig. 4 zeigt, sind die Öffnungen an der Austrittsseite in Form von Schlitzen 17 ausgebildet. Dabei sind mehrere Gruppen von Schlitzen, mindestens drei Gruppen, vorgesehen, die sich dadurch unterscheiden, daß die Schlitzlänge unterschiedlich ist. Es hat sich nämlich gezeigt, daß dann die Neigung zu Eigenschwingungen weitgehend herabgesetzt wird, wenn die inneren Kanten 8 der einzelnen Öffnungsgruppen versetzt zueinander liegen. So liegt die Öffnungsgruppe 3 in bezug auf die Öffnungsgruppe 3a um das Maß "d" versetzt zueinander, was die innere Kante 8 der Öffnungen anbelangt. Ebenso liegt die Öffnungsgruppe 3b versetzt zu der Öffnungsgruppe 3d, ebenfalls um das Maß "d". Das gleiche gilt für die Öffnungsgruppe 3a in bezug auf die Öffnungsgruppe 3d. Am dargestellten Ausführungsbeispiel liegen vier Öffnungsgruppen versetzt zueinander. Wie Versuche gezeigt haben, ist ein günstiges Maß "d" dann erreicht, wenn es mindestens einem Viertel der Dicke der Membran entspricht ($d \geq 1/4e$).

Wie sich insbesondere aus den Fig. 2 und 3 ergibt, ist im Stellraum hinter der Membran, und zwar zwischen der Gehäuseinnenwand 6 und der Membran 1, ein dauerelastischer Füllkörper 7 eingeführt, der eine gewisse Kraft aus der Membran ausübt.

Dadurch wird erreicht, daß bei sehr geringen Druckdifferenzen zwischen der Eingangsseite und der Ausgansseite die Neigung der Membran zu Eigenschwingungen - weil nämlich dann die Membran sozusagen auf dem Gasstrahl "schwimmt"- weitgehend herabgesetzt ist, weil dieses dauerelastische Füllmaterial eine zusätzliche Kraft auf die Membran zum Zwecke der Anpressung der Membran auf die Öffnungen ausübt.

## Patentansprüche

1. Druckmittelbetätigtes Membranventil, dessen in einem Gehäuse (9, 10, 12) eingespannte Membran (1) auf einem Stützkörper (2) aufliegt, der am Ende des Eingangskanals (13) aufgesezt ist, der konzentrisch zum Eingangskanal (13) Öffnungen (3) aufweist, und der eine zum Eingangskanal (13) konzentrisch aber in Strömungsrichtung vor den Öffnungen (3) angeordnete Dichtkante (4) besitzt,

dadurch gekennzeichnet, daß der Abstand "a" zwischen der Dichtkante (4) und den inneren Kanten (8) der Öffnungen (3) an der Austrittsseite mindestens dreimal so groß ist wie die Höhe "b" der Dichtkante (4), bezogen auf die Membranauflagefläche (2a) des Stützkörpers (2), aber nicht kleiner als der Membranhub "c", der definiert ist als der Abstand von der Spitze der Dichtkante (4) bis zur Innenseite der an der Gehäuseinnenwand vollständig anliegenden Membran (1).

2. Druckmittelbetätigtes Membranventil nach Anspruch 1

dadurch gekennzeichnet, daß die äußere Einspannfläche (11) für die Membran (1) gegenüber der inneren Kante (8) der Öffnungen (3) an der Austrittsseite abgesenkt ist.

3. Druckmittelbetätigtes Membranventil nach Anspruch 2

dadurch gekennzeichnet, daß die über der Öffnung (3) an der Austrittsseite befindliche Fläche der Membran (1) unter einem Winkel ($\alpha$) von mindestens 2 Grad in bezug auf die Ebene der Einspannfläche (11) verläuft.

4. Druckmittelbetätigtes Membranventil nach Anspruch 1

dadurch gekennzeichnet, daß die Öffnungen (3) an der Austrittsseite in mehrere Gruppen, mindestens drei Gruppen, zusammengefaßt sind, deren innere Kanten (8) versetzt zueinander liegen.

5. Druckmittelbetätigtes Membranventil nach Anspruch 4

dadurch gekennzeichnet, daß das Maß der Versetzung der zu Gruppen zusammengefaßten Öffnungen (3) mindestens einem Viertel der Dicke "e" der Membran (1) entspricht.

6. Druckmittelbetätigtes Membranventil nach Anspruch 1

dadurch gekennzeichnet, daß im Stelldruckraum zwischen der Membran (1) und der Gehäuseinnenwand (6) ein zusammendrockbarer dauerelastischer Füllkörper (7) eingebracht ist.

## Claims

1. Pressure-medium-actuated diaphragm valve, the diaphragm (1) of which is clamped in a housing (9, 10, 12) and rests on a support body (2), which is placed on the end of the entry channel (13), displays openings (3) concentric with the entry channel (13) and which displays a sealing edge (4), which is concentric with the entry channel (13), but arranged in flow direction in front of the openings (3), characterised thereby, that the spacing "a" between the sealing edge (4) and the inner edges (8) of the openings (3) at the exit side (14) is at least three times as great as the height "b" of the sealing edge (4) with reference to the diaphragm support surface (2a) of the support body (2), but not smaller than the diaphragm stroke "c", which is defined as the spacing from the tip of the sealing edge (4) to the inward side of the diaphragm (1) when lying fully against the inward housing wall.

2. Pressure-medium-actuated diaphragm valve according to claim 1, characterised thereby, that the outer clamping surface (11) for the diaphragm (1) is lowered relative to the inner edge (8) of the openings (3) at the exit side.

3. Pressure-medium-actuated diaphragm valve according to claim 2, characterised thereby, that that surface of the diaphragm (1), which is disposed above the opening (3) at the exit side, extends at an angle ($\alpha$) of at least 2 degrees with respect to the plane of the clamping surface (11).

4. Pressure-medium-actuated diaphragm valve according to claim 1, characterised thereby, that the openings (3) at the exit side are combined into several groups, at least three groups, the inner edges (8) of which lie displaced one from the other.

5. Pressure-medium-actuated diaphragm valve according to claim 4, characterised thereby, that the amount of the displacement of the openings (3), which are combined into groups, amounts to at least a quarter of the thickness "e" of the diaphragm (1).

6. Pressure-medium-actuated diaphragm valve according to claim 1, characterised thereby, that a compressible, permanently elastic filling body (7) is introduced in the setting pressure space between the diaphragm (1) and the inward housing wall (6).

## Revendications

1. Soupape à diaphragme actionnée par agent sous pression, dont le diaphragme (1) enserré dans un boîtier (9, 10, 12) s'applique sur un corps d'appui (2), qui est placé à l'extrémité du canal d'entrée (13), qui présente des orifices (3) concentriquement au canal d'entrée (13), et qui comporte une arête d'étanchéité (4) disposée concentriquement au canal d'entrée (13), mais en avant des orifices (3) dans le sens du courant, soupape caractérisée en ce que la distance (a) entre l'arête d'étanchéité (4) et les bords intérieurs (8) des orifices (3) prévus sur la face de sortie est au moins trois fois supérieure à la hauteur (b) de l'arête d'étanchéité (4), par rapport à la surface d'appui (2a) du diaphragme que présente le corps d'appui (2), mais n'est pas inférieure à la course (c) du diaphragme qui est définie comme étant la distance de la pointe de l'arête d'étanchéité (4) à la face intérieure du diaphragme (1) s'appliquant complètement contre la paroi intérieure du boîtier.

2. Soupape à diaphragme actionnée par agent sous pression, selon la revendication 1, caractérisée en ce que la surface d'enserrage extérieure (11) pour le diaphragme (1) se trouve abaissée par rapport aux bords intérieurs (8) des orifices (3) prévus sur la face de sortie.

3. Soupape à diaphragme actionnée par agent sous pression, selon la revendication 2, caractérisée en ce que la surface du diaphragme (1) qui se trouve au-dessus des orifices (3) prévus sur la face de sortie s'étend sous un angle ($\alpha$) d'au moins deux degrés par rapport au plan de la surface d'enserrage (11).

4. Soupape à diaphragme actionnée par agent sous pression, selon la revendication 1, caractérisée en ce que les orifices (3) prévus sur la face de sortie sont réunis en plusieurs groupes, au moins trois groupes, dont les bords intérieurs (8) sont décalés les uns par rapport aux autres.

5. Soupape à diaphragme actionnée par agent sous pression, selon la revendication 4, caractérisée en ce que la grandeur du décalage entre les orifices (3) réunis en groupes correspond à au moins un quart de l'épaisseur (e) du diaphragme (1).

6. Soupape à diaphragme actionnée par agent sous pression, selon la revendication 1, caractérisée en ce que dans la chambre sous pression de réglage entre le diaphragme (1) et la paroi intérieure (6) du boîtier est inséré un corps de remplissage (7) à élasticité permanente, compressible.

Fig. 1

EP 0 190 414 B1

Stellglied-geschlossen

Fig. 2

Fig. 3

Stellglied-Öffnungsbeginn

Fig. 4